(19) Europäisches Patentamt European Patent Office Office européen des brevets

(11) **EP 4 624 530 A1**

(12) **EUROPÄISCHE PATENTANMELDUNG**

(43) Veröffentlichungstag:
    **01.10.2025  Patentblatt 2025/40**

(21) Anmeldenummer: **24167156.9**

(22) Anmeldetag: **28.03.2024**

(51) Internationale Patentklassifikation (IPC):
    **C08L 77/02** (2006.01)    **C08L 77/06** (2006.01)

(52) Gemeinsame Patentklassifikation (CPC):
    (C-Sets verfügbar)
    **C08L 77/02; C08G 69/48; C08L 77/06**    (Forts.)

(84) Benannte Vertragsstaaten:
    **AL AT BE BG CH CY CZ DE DK EE ES FI FR GB GR HR HU IE IS IT LI LT LU LV MC ME MK MT NL NO PL PT RO RS SE SI SK SM TR**
    Benannte Erstreckungsstaaten:
    **BA**
    Benannte Validierungsstaaten:
    **GE KH MA MD TN**

(71) Anmelder: **Evonik Operations GmbH**
    **45128 Essen (DE)**

(72) Erfinder:
    • **LINEMANN, Reinhard**
      **66121 Saarbrücken (DE)**
    • **VAN LAAK, Hermann**
      **46569 Hünxe (DE)**

    • **HEIMINK, Jan**
      **58454 Witten (DE)**
    • **DANKE, Varun**
      **40597 Düsseldorf (DE)**
    • **MICOINE, Kévin**
      **45701 Herten (DE)**
    • **ALTKEMPER, Stefan**
      **46282 Dorsten (DE)**

(74) Vertreter: **Evonik Patent Association**
    **c/o Evonik Industries AG**
    **IP Management**
    **Postcode 84/339**
    **Rodenbacher Chaussee 4**
    **63457 Hanau (DE)**

(54) **HOCHVISKOSE, MULTIMODALE POLYAMID-ZUSAMMENSETZUNG**

(57)    Hochviskose, multimodale Polyamind-Zusammensetzungen enthaltend ein Polyamid (A) mit einem Überschuss an Amin-Kettenende; ein Polyamid (B), dessen Kettenenden zu weniger als der Hälfte aus Aminogruppen bestehen; und einem Kettenverlängerer; deren Zusammensetzung durch einen Spreizfaktor und einen Polydispersitätsindex beschrieben wird. Der Spreizfaktor definiert aus dem Quotienten zwischen der theoretisch erreichten zahlenmittleren Molmasse Mn des Reaktionsprodukts des Polyamids (A) mit dem Kettenverlängerer und der Mn des Polyamids (B) und überschreitet einen Wert von 2,5.

EP 4 624 530 A1

**(Forts. nächste Seite)**

(52) Gemeinsame Patentklassifikation (CPC): (Forts.)

C-Sets
**C08L 77/02, C08L 77/02;**
**C08L 77/06, C08L 77/06**

**Beschreibung**

Hochviskose, multimodale Polyamid-Zusammensetzungen enthaltend Kettenverlängerer, deren Zusammensetzung durch einen Spreizfaktor und einen Polydispersitätsindex beschrieben wird.

WO 2006/07989 A1 offenbart hochviskose Polyamidformmassen. Es wird ein theoretischer Zusammenhang des Polydispersitätsindexes mit der Terminierung der unterschiedlichen Polyamide dargelegt. Als Maximalwert des PDI wird 2 offenbart. Die offenbarten Beispiele zeigen keine Unterstützung dieses theoretischen Ansatzes. Im gesamten Dokument sind lediglich Summen der Endgruppen der Polyamide offenbart, jedoch keine Spezifizierung der Art der Endgruppen. Weiterhin wird die Umsetzung von "niedermolekularem" Polyamid (Molmasse < 30000 g/mol) mit "höhermolekularem" PA (MM> 30000 g/mol) ggf unter Zugabe von unterschiedlichen Mengen Schlagzähmodifizierer (IM) und ggf. unter Zugabe von einem Viskositätserhöhungsmittel offenbart. Der positive Effekt soll eine Verbesserung (Erhöhung) der Schmelzefestigkeit (SMF) sein. Die Beispiele zeigen jedoch, dass die Zugabe des Viskositätserhöhungsmittels die Viskosität nicht erhöht. Die Kerbschlagzähigkeit ist eindeutig abhängig von der IM-Menge.

EP 1690889 A1 offenbart Polyamidzusammensetzungen unter Verwendung des Kettenverlängerers Brüggolen M1251. Es sind jedoch lediglich Angaben zur Herstellung offenbart, die entscheidenden Produktangaben zu den Molmassen und damit zum Polydispersitätsindex sind nicht offenbart und lassen sich auch nicht abschätzen.

EP 3296345 A1 offenbart Polyamidmischungen unter Verwendung von Polyamin-Polyamid-Pfropfcopolymeren, welche besonders hydrolysestabil sind. Die Beispiele zeigen die Nachteile der Verwendung eines Kettenverlängerers.

Aufgabe der vorliegenden Erfindung ist es, hochviskose, multimodale Polyamidzusammensetzungen zur Verfügung zu stellen, deren hochmolekularer Anteil den Polydispersitätsfaktor stark erhöht.

Überraschend wurde festgestellt, dass ein theoretischer Ansatz in dem durch Berechnung bestimmter stöchiometrischer Werte Polyamid-Zusammensetzungen generiert werden können, wobei der sogenannte Spreizfaktor (S) hierbei einen Wert von 2,5 überschreitet. In dem Verfahren werden durch Mischen von aminterminierten Polyamiden (A) mit nicht-aminterminierten Polyamiden (B), wobei den nicht-aminterminierten Polyamiden (B) ein Kettenverlängerer zugesetzt wird, die Aufgabe dann löst, wenn der Spreizfaktor (S) hierbei den Wert von 2,5 überschreitet. Der Spreizfaktor (S) wird durch Division der zahlenmittleren Molmasse ( $M_n^{Amin,final}$ ) der aminterminierten Polyamide (final) mit der zahlenmittleren Molmasse $M_n^{B}$ des verwendeten nicht-aminterminierten Polyamids (B) gemäß Formel 7 ermittelt.

Gegenstand der vorliegenden Erfindung sind hochviskose, multimodale Polyamid-Zusammensetzungen, die eine zahlenmittlere Molmasse ( $M_n^{final}$ ) von mindestens 26000 g/mol aufweisen, bestehend aus:

a) Mindestens einem aminterminierten Polyamid (final) mit einem Faktor X-mer von mindestens 1,5, wobei die aminterminierten Polyamide (final) das Reaktionsprodukt der aminterminierten Polyamide(A) mit einen Kettenverlängerer darstellen,

b) mindestens ein nicht-aminterminiertes Polyamid (B), wobei die Polyamid-Zusammensetzungen einen Polydispersitätsindex berechnet nach PDI = Mw / Mn einen Wert von mindestens 2,2 aufweisen, Mw und Mn werden dafür mittels GPC der Polyamid-Zusammensetzungen bestimmt,

- wobei die zahlenmittlere Molmasse ( $M_n^{final}$ ) nach der folgenden Formel 3 bestimmt wird

Formel 3: $$M_n^{final} = \frac{2*10^6}{(\varphi_A[NH_2]_A - M[k]) + \varphi_A[COOH]_A + \varphi_B[COOH]_B} \ [g/mol]$$

mit

$\varphi_A$ =   ist der Massen-Prozentsatz der aminterminierten Polyamide (A) bezogen auf die Massensumme der Polyamide (A) und (B)

$\varphi_B$ =   ist der Massen-Prozentsatz der nicht-aminterminierten Polyamide (B) bezogen auf die Massensumme der Polyamide (A) und (B)

$[COOH]_A$   ist die Menge der Säureendgruppen in mmol/kg der Polyamide (A)

$[COOH]_B$   ist die Menge der Säureendgruppen der Polyamide (B) in mmol/kg

$[NH_2]_A$   ist die Menge der Aminoendgruppen in mmol/kg der Polyamide (A)

$[k]$ =   Menge der aktiven Gruppen in mmol/kg des Kettenverlängerers

$M$   Massen-Prozentsatz des Kettenverlängerers bezogen auf die Masse der Polyamide (A) und (B),

o wobei die Prozentsätze Bruchteile betreffen und infolgedessen immer eine Größe unter 1 haben; die Summe $\varphi_A$ + $\varphi_B$ ist bevorzugt gleich 1,

- wobei der Wert der Größe X-mer gemäß folgender Formel 4 berechnet wird

$$\text{Formel 4:} \qquad X = \frac{M_n^{Amine,final}}{M_n^{Amin,before}} = \frac{([NH_2]_A + [COOH]_A) * \varphi_A}{(\varphi_A [NH_2]_A - M[k]) + \varphi_A [COOH]_A}$$

mit den Definitionen der Variablen wie vorstehend angegeben,

o wobei $M_n^{Amin,before}$ über die Bestimmung der Endgruppen der aminterminierten Polyamide (A) nach Formel 5 berechnet wird

$$\text{Formel 5:} \qquad M_n^{Amin,before} = \frac{2*10^6}{[NH_2]_A + [COOH]_A} \; [g/mol].$$

Ein weiterer Gegenstand der vorliegenden Erfindung ist das Verfahren zur Herstellung von hochviskosen, multimodalen Polyamid-Zusammensetzungen, wobei

a) mindestens ein aminterminiertes Polyamid (A) bereitgestellt wird,
b) mindestens ein nicht-aminterminiertes Polyamid (B) bereitgestellt wird, denen ein Kettenverlängerer zugesetzt wird,
c) die Polyamide (A) und (B) so ausgewählt sind, dass ein Spreizfaktor von 2,5 überschritten wird, wobei der Spreizfaktor durch Division der zahlenmittleren Molmasse ( $M_n^{Amin,final}$ ) (Formel 1) mit der zahlenmittleren Molmasse $M_n^B$ (Formel 2) der verwendeten nicht-aminterminierten Polyamide (B) ermittelt wird,

- wobei die zahlenmittlere Molmasse ( $M_n^{Amin,final}$ ) nach der Formel 1 berechnet wird

$$\text{Formel 1:} \qquad M_n^{Amin,final} = \frac{2*10^6 * \varphi_A}{(\varphi_A [NH_2]_A - M[k]) + \varphi_A [COOH]_A} \; [g/mol]$$

mit

$\varphi_A$ = ist der Massen-Prozentsatz der aminterminierten Polyamide (A) bezogen auf die Massensumme der Polyamide (A) und (B)

$\varphi_B$ = ist der Massen-Prozentsatz der nicht-aminterminierten Polyamide (B) bezogen auf die Massensumme der Polyamide (A) und (B)

$[COOH]_A$ ist die Menge der Säureendgruppen in mmol/kg der Polyamide (A)
$[NH_2]_A$ ist die Menge der Aminoendgruppen in mmol/kg der Polyamide (A)
$[k]$ = Menge der aktiven Gruppen in mmol/kg des Kettenverlängerers
$M$ Massen-Prozentsatz des Kettenverlängerers bezogen auf die Masse der Polyamide (A) und (B),

- wobei $M_n^B$ über die Bestimmung der Endgruppen nach Formel 2 berechnet wird,

$$\text{Formel 2:} \qquad M_n^B = \frac{2*10^6}{[NH_2]_B + [COOH]_B} \; [g/mol]$$

mit

$[COOH]_B$ ist die Menge der Säureendgruppen in mmol/kg der Polyamide (B)
$[NH_2]_B$ ist die Menge der Aminoendgruppen in mmol/kg der Polyamide (B)

d) die Komponenten in einem geeigneten Gerät gemeinsam unter Mischen erhitzt werden,

wobei die Prozentsätze Bruchteile betreffen und infolgedessen immer eine Größe unter 1 haben; die Summe $\varphi_A$ + $\varphi_B$ ist bevorzugt gleich 1,

sowie gegebenenfalls weitere Komponenten verwendet werden können, als auch weitere Verfahrensschritte durchgeführt werden können.

Ein weiterer Gegenstand der vorliegenden Erfindung sind Formmassen enthaltend die erfindungsgemäßen hochviskosen, multimodalen Polyamid-Zusammensetzungen und/oder die verfahrensgemäßen Produkte zu mindestens 50 Gew.-%, bevorzugt zu mindestens 60 Gew-%, mehr bevorzugt zu mindestens 70 Gew-%, besonders bevorzugt mindestens 80 Gew.-%, weiter besonders bevorzugt mindestens 90 Gew.-%, mehr besonders bevorzugt mindestens 95 Gew.-% und insbesondere bevorzugt zu mindestens 99 Gew.-%.

Ein weiterer Gegenstand der vorliegenden Erfindung sind Formkörper bestehend aus den erfindungsgemäßen Formmassen.

Ein weiterer Gegenstand der Erfindung ist Verwendung der erfindungsgemäßen Formkörper als Beschichtung, Abdeckung, Folie, Profil, Rohr, Wellrohr, Hohlkörper, Dichtung, Verkleidung, Halterung, Gehäuse, Ummantelung, Elektro- und Elektronikbauteile.

Die berechneten/theoretischen Werte der vorliegenden Erfindung beruhen ausschließlich auf den Werten der verwendeten Polyamid-bildenden Komponenten, der gebildeten Polyamide und dem verwendeten kettenverlängernden Additiv. Mögliche weitere Additive, wie z.B. Schlagzähmodifizierer sind nicht einbezogen.

Unter dem Begriff "hochviskos" werden im Umfang der Erfindung Polyamid-Zusammensetzungen verstanden, deren Lösungsviskosität gemäß DIN 307 mindestens 250 ml/g beträgt.

Unter dem Begriff "hochmolekular" werden Polyamide verstanden, deren gewichtsmittlere Molmasse Mw mindestens 100000 g/mol beträgt, bestimmt mittels GPC.

Die erfindungsgemäßen hochviskosen, multimodalen Polyamid-Zusammensetzungen, die verfahrensgemäßen Produkte und die Formkörper enthaltend die erfindungsgemäßen Polyamid-Zusammensetzungen, sowie die erfindungsgemäßen Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Im Schutzumfang liegen im kommerziellen Handeln übliche Konfektionierungen und Abpackungen der erfindungsgemäßen Produkte sowohl als solche, als auch in eventuellen Zerkleinerungsformen soweit diese nicht in den Ansprüchen definiert sind.

Die gegebenenfalls verschiedenen Einheiten der Polyamide sind statistisch verteilt. Statistische Verteilungen sind blockweise aufgebaut mit einer beliebigen Anzahl an Blöcken und einer beliebigen Sequenz oder sie unterliegen einer randomisierten Verteilung, sie können auch alternierend aufgebaut sein oder auch über die Polymerkette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Ein Vorteil des erfindungsgemäßen Verfahrens ist, dass die erfindungsgemäßen multimodalen, hochviskosen Polyamide direkt in einem Verfahren, bevorzugt durch Extrusion, herstellbar sind. Es ist keine sonst übliche Nachkondensation notwendig.

Ein weiterer Vorteil der erfindungsgemäßen Polyamid-Zusammensetzungen ist, dass Formkörper bestehend aus diesen Zusammensetzungen/Formmassen ohne Weichmacher oder/und ohne Schlagzähmodifizierer eine außerordentlich hohe mechanische Festigkeit und Zähigkeit aufweisen, insbesondere bei niedrigen Temperaturen. Besonders die Charpy Kerbschlagzähigkeit bei 0 °C zeigt die Vorteile dieser Weichmacher- und Schlagzähmodifizierer-freien Zusammensetzungen.

Die Polyamide der erfindungsgemäßen Zusammensetzungen und Formmassen können Homopolymere, Co-Polymere oder Blends unterschiedlicher Polyamide sein. Die Unterschiede der Polyamide können z. B. aufgrund unterschiedlicher verwendeter Monomere in der Polymerisation, unterschiedlicher Molmassenverteilung (welche sich z. B. in unterschiedlichen Viskositäten ausdrücken kann) oder unterschiedlichen Endgruppen ausdrücken.

Bevorzugt sind die Polyamide ausgewählt aus aliphatischen und/oder teil-aromatischen Polyamiden, geeignete Monomere können ω-Aminosäuren oder Lactame sein, dies führt zu sogenannten AB Polyamiden (sogenannter Perlontyp), Diamine und Disäuren sein, dies führt zu sogenannten AA.BB Polyamiden (sogenannter Nylontyp). Optional können die Monomere substituiert sein, wobei die Substituenten im Sinne der Polymerisation/Polykondensation inert sein müssen, bevorzugt keine Brönstedt-Säuren oder-Basen darstellen. Die Monomere können im Falle der Bildung von AA.BB Polyamiden sogenannte semiaromatische Polyamide bilden, das heißt, dass lediglich einer der beiden Bausteine, Diamin oder Disäure, einen aromatischen Kern aufweist.

Bevorzugte Monomere sind ausgewählt aus aliphatischen C4 bis C12-Lactamen oder ω-Aminocarbonsäuren mit 4 bis 44 Kohlenstoffatomen, bevorzugt 4 bis 18 Kohlenstoffatomen, aus mindestens einem Diamin aus der Gruppe der aliphatischen Diamine mit 4 bis 18 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen.

Mehr bevorzugt sind die Polyamide ausgewählt aus PA 8, PA 9, PA 10, PA 11, PA 12, PA 4.6, PA 6.10, PA 6.12, PA 6.13, PA 6.14, PA 6.16, PA 8.10, PA 8.13, PA 9.10, PA 9.12, PA 10.10, PA 10.12, PA 10.14, PA 10.16, PA 10.18, PA 12.12, PA DACH.6 (Diaminocyclohexan), PA DACH.10, PA DACH.12, PA DACH.10/11 PA PACM.6 (4,4-Diaminodicyclohexylmethan), PA PACM.10, PA PACM.12, PA MACM.6 (3,3'-Dimethyl-4,4'-diaminocyclohexylmethan), PA MACM.10, PA MACM.12,. PA 6.T (T = Terephthalsäure), PA 9.T, PA 10.T, PA 12.T PA 6.I (I = Isophthalsäure), PA 9.I, PA 10.I, PA 12.I PA 6.N (2,6-Naphthalindicarbonsäure), PA 10.N, PA 12.N PA MXD.6 (MXD = meta-Xyloldiamin), PA MXD.10, PA MXD.12 PA IPD.6 (Isophorondiamin), PA IPD.10, PA IPD.12, PA IND.6 (Isononyldiamin, 1,6-Diamino-2,4,4-trimethylhexan), PA IND.10, PA IND.12, PA ND.6 (Nonyldiamin, 1,6-Diamino-2,2,4-trimethylhexan), PA ND.10, PA ND.12.

Weiterhin bevorzugt weisen die Polyamide in allen Monomereinheiten mindestens 8 Kohlenstoffatome pro Amideinheit auf. Mehr bevorzugt weisen die Polyamide im statistischen Mittel über das Polymer 8 bis 16 Kohlenstoffatome, mehr bevorzugt 9 bis 14, besonders bevorzugt 10 bis 12 Kohlenstoffatome pro Amideinheit auf.

Besonders bevorzugt sind die Polyamide ausgewählt aus PA 6.12, PA 10.10, PA 10.12, PA 11 und PA 12 und insbesondere bevorzugt PA 11 und PA12.

Die Polyamide der erfindungsgemäßen Zusammensetzungen enthalten mindestens ein nicht-aminterminiertes Polyamid und ein aminterminiertes Polyamid.

Dem Fachmenschen ist bekannt, wie die Termini von Polyamiden definiert synthetisiert werden können. Dies geschieht mit sogenannten Reglern. Im Falle von Polyamiden des Nylontyps kann dies ein schlichter stöchiometrischer Überschuss einer der beiden Komponenten sein. Oder es wird ein sogenannter externer Regler zugesetzt, dies kann für beide Polyamidtypen (Perlon und Nylon) durchgeführt werden. Diese Regler können z.B. im Sinne der Polyamidbildung monofunktionalisierte aliphatische oder aromatische Verbindungen sein; auf diese Weise entstehen im Sinne der Polyamidbildung inerte Termini.

In den Fällen, in denen die Kohlenstoffanzahl pro Amideinheit der Polyamide größer 6 definiert sind, und in den Fällen, in denen die Polyamide spezifisch so definiert sind, dass kein PA 6 enthalten ist, gilt folgendes: Das kettenverlängernde Additiv ist gegebenenfalls als Masterbatch in einem Polyamid verteilt oder das kettenverlängernde Additiv selbst weist einen Polyamidbaustein auf, wobei dieses Polyamid außerhalb der Definition der bevorzugten Polyamide der erfindungsgemäßen hochviskosen, multimodalen Polyamid-Zusammensetzungen und -Formmassen liegen kann. Der hierdurch verursachte niedrige Gehalt an z.B. Polyamid 6 gilt als erfindungsgemäß. Dieser niedrige Gehalt liegt bevorzugt im Bereich von 1 ppm bis 5 % berechnet als Massenanteile bezogen auf die Gesamtmasse der erfindungsgemäßen Zusammensetzungen, mehr bevorzugt von 1000 ppm bis 3 % und besonders bevorzugt von 1 bis 2,5 %.

Die erfindungsgemäßen multimodalen Polyamid-Zusammensetzungen werden durch Mischen von aminterminierten Polyamiden (A) mit nicht-aminterminierten Polyamiden (B) erzeugt, wobei den nicht-aminterminierten Polyamiden (B) ein Kettenverlängerer zugesetzt wird. Während des Mischprozesses reagiert der Kettenverlängerer mit dem eingesetzten aminterminierten Polyamid und bildet dabei ein hochmolekulares und hochviskoses aminterminiertes Polyamid. Der Mischprozess ist also ein reaktiver Prozess zum Aufbau einer neuen Polyamidkomponente.

Die nicht-aminterminierten Polyamide (B) weisen an mindestens 70 % aller Termini keine Aminogruppen auf, diese Termini sind im Sinne der Polyamidbildung inert oder sind Carbonsäuregruppen (gemeinsam bezeichnet als "Nicht-Aminterminus").

Bevorzugt weisen die nicht-aminterminierten Polyamide (B) an mindestens 80 %, mehr bevorzugt an mindestens 85 %, besonders bevorzugt an mindestens 90 % und insbesondere bevorzugt an mindestens 95% Nicht-Amintermini auf.

Diese statistischen Angaben können über die Mischung unterschiedlicher Polyamide (Blends) verwirklicht werden, wobei jede Komponente an mehr als der Hälfte aller Termini Nicht-Amintermini aufweisen muss. Auch die Einzelkomponenten der nicht-aminterminierten Polyamide (B) weisen bevorzugt an mindestens 60 % der Termini Nicht-Amintermini auf, mehr bevorzugt an mindestens 70 %, weiter mehr bevorzugt an mindestens 80 %, besonders bevorzugt an mindestens 90 %. Damit liegen auch Mischungen unterschiedlich terminierter "nicht-aminterminierter" Polyamide im Schutzbereich.

Werden mehrere nicht-aminterminierte Polyamide (B) verwendet, so berechnet sich die zahlenmittlere Molmasse aus der Summe der Einzelwerte, jeweils multipiziert mit ihrem Massenanteil an der Summe der nicht-aminterminierten Polyamide (B).

Bevorzugt sind die nicht-aminterminierten Polyamide (B) säureregulierte Polyamide, damit sind die Nicht-Amintermini dann Carbonsäuregruppen und werden als säureterminierte Polyamide bezeichnet.

Bevorzugt weisen die säureterminierten Polyamide eine Menge der Säureendgruppen von mindestens 50 mmol/kg, mehr bevorzugt 60 mmol/kg, weiter mehr bevorzugt 70 mmol/kg, besonders bevorzugt 80 mmol/kg, mehr besonders bevorzugt mindestens 90 mmol/kg, weiter mehr besonders bevorzugt mindestens 100 mmol/kg, insbesondere bevorzugt mindestens 110 mmol/kg, weiter insbesondere bevorzugt mindestens 120 mmol/kg, weiter mehr insbesondere bevorzugt mindestens 130 mmol/kg auf.

Die säureterminierten Polyamide weisen bevorzugt unter 30 % der Termini Aminogruppen auf, bevorzugt 20 %, mehr bevorzugt 15 %, weiter mehr bevorzugt 10%, besonders bevorzugt 8 %, weiter besonders bevorzugt 6 % und insbesondere bevorzugt unter 4 % auf. Bevorzugt weisen die säureterminierten Polyamide mindestens 0,05 %, weiter bevorzugt 0,1, mehr bevorzugt 0,5 und besonders bevorzugt mindestens 1 % der Termini als Aminogruppen auf.

Bevorzugt weisen die säureterminierten Polyamide 0,05 % bis 20 %, mehr bevorzugt 0,1 bis 10 %, besonders bevorzugt 0,5 bis 8 % und insbesondere bevorzugt 0,1 bis 6 % der Termini als Aminogruppen auf.

Bevorzugt werden im erfindungsgemäßen Verfahren aminterminierte Polyamide (A) und säureterminierte Polyamide verwendet.

Mit Hilfe der Termini der Polyamide lassen sich theoretische zahlenmittlere Molmassen berechnen

$$\text{Formel 6:} \qquad M_n = \frac{2*10^6}{[NH_2]+[COOH]+[R]} \quad [g/mol]$$

Dies ist eine allgemeine Formel, die dem Fachmenschen bekannt ist. Im Umfang dieser Erfindung werden die zahlenmittleren Molmassen der "nicht-aminterminierten Polyamide" ebenfalls prinzipiell nach dieser Formel berechnet, jedoch wird im Nenner der Term [COOH] + [R] zusammengezogen als Summe der Säureendgruppen und der inerten Termini [R].

Bevorzugt weisen die aminterminierten Polyamide (A) eine Menge der Aminendgruppen von mindestens 40 mmol/kg, bevorzugt mindestens 50 mmol/kg, mehr bevorzugt mindestens 75 mmol/kg, weiter mehr bevorzugt mindestens 100 mmol/kg, besonders bevorzugt mindestens 120 mmol/kg auf.

Die aminterminierten Polyamide (A) weisen bevorzugt an mindestens 70 %, mehr bevorzugt an mindestens 80%, besonders bevorzugt an mindestens 90 % und insbesondere bevorzugt an mindestens 95% Aminendgruppen auf.

Die aminterminierten Polyamide (A) weisen bevorzugt unter 30 % der Termini Nicht-Amintermini auf, bevorzugt 20 %, mehr bevorzugt 15 %, weiter mehr bevorzugt 10 %, besonders bevorzugt 8 %, weiter besonders bevorzugt 6% und insbesondere bevorzugt unter 4 % auf. Bevorzugt weisen die aminterminierten Polyamide (A) mindestens 0,05 %, weiter bevorzugt 0,1, mehr bevorzugt 0,5 und besonders bevorzugt mindestens 1% der Termini als Nicht-Amintermini auf.

Weiter bevorzugt weisen die aminterminierten Polyamide (A) 0,05 % bis 20 %, mehr bevorzugt 0,1 bis 10 %, besonders bevorzugt 0,5 bis 8 % und insbesondere bevorzugt 1 bis 6 % der Termini als Nicht-Amintermini auf.

Insbesondere sind die Termini der aminterminierten Polyamide (A), welche nicht Amintermini sind, Säuretermini.

Bevorzugt weisen die Polyamide der erfindungsgemäßen Zusammensetzungen säureterminierte Polyamide (B) auf, deren Menge an Säureendgruppen größer oder gleich der Menge der Aminoendgruppen der aminterminierten Polyamide (A) ist, besonders bevorzugt ist die Menge an Säureendgruppen der säureterminierte Polyamide (B) größer als die Menge der Aminoendgruppen der aminterminierten Polyamide (A).

Grundsätzlich sind dem Fachmenschen die Bestimmungsmethoden der Endgruppen von Polyamiden bekannt. Bevorzugt wird die Bestimmung der Carboxylendgruppen durch Lösen des Polymers in Benzylalkohol und alkalimetrische Titration mit alkoholischer KOH (0,1 mol/l Maßlösung) gegen Phenolphthalein durchgeführt. Bevorzugt erfolgt die Bestimmung der Aminoendgruppen in m-Kresol durch Lösen des Polyamides bei erhöhter Temperatur. Die Endpunktanzeige erfolgt potentiometrisch. Beide Methoden sind später genauer beschreiben und werden besonders bevorzugt danach bestimmt. Bevorzugt erfolgt die Bestimmung der inerten Endgruppen mittels NMR-Spektroskopie, insbesondere durch gekoppelte Proton-Kohlenstoff-Methoden.

Der Spreizfaktor (S) ist ein theoretischer Wert, der im erfindungsgemäßen Verfahren eingehalten werden muss. Er ist definiert als der Quotient (gemäß Formel 7) aus $M_n^{Amin,final}$ (gemäß Formel 1) und $M_n^B$ (gemäß Formel 2)

Formel 7
$$S = \frac{M_n^{Amin,final}}{M_n^B} = \frac{([NH_2]_B + [COOH]_B) * \varphi_A}{(\varphi_A[NH_2]_A - M[k]) + \varphi_A[COOH]_A}$$

Der Spreizfaktor beträgt mindestens 2,5, bevorzugt 3, mehr bevorzugt 3,5, weiter mehr bevorzugt 4, besonders bevorzugt 4,5, mehr besonders bevorzugt 5, weiter besonders bevorzugt 6, insbesondere bevorzugt mindestens 7. Der Spreizfaktor beträgt höchstens 30, bevorzugt 25, mehr bevorzugt 20, besonders bevorzugt 15 und insbesondere bevorzugt höchstens 13. Bevorzugt beträgt der Spreizfaktor von 2,5 bis 30, mehr bevorzugt von 3 bis 25, besonders bevorzugt von 3,5 bis 20 und insbesondere bevorzugt von 4 bis 15.

Bevorzugt weist der Spreizfaktor einen Wert von 2,5 bis 30, mehr bevorzugt von 3 bis 25, besonders bevorzugt von 3,5 bis 20 und insbesondere bevorzugt von 4 bis 15 auf und bezieht sich auf ein säureterminiertes Polyamid als nicht aminterminiertes Polyamid (B).

Bevorzugt weisen die Polyamide der erfindungsgemäßen Zusammensetzungen säureterminierte Polyamide auf, deren Menge an Säureendgruppen größer oder gleich der Menge der Aminoendgruppen der aminterminierten Polyamide ist, wobei der Spreizfaktor einen Wert von 2,5 bis 30, mehr bevorzugt von 3 bis 25, besonders bevorzugt von 3,5 bis 20 und insbesondere bevorzugt von 4 bis 15 aufweist.

Bevorzugt enthalten die erfindungsgemäßen Zusammensetzungen und die Formmassen neben den vorstehend definierten Polyamiden kein weiteres Polyamid.

Den nicht-aminterminierten Polyamiden (B) wird ein kettenverlängerndes Additiv (Kettenverlängerer) zugesetzt, wie Carbonyl-bis-caprolactam (CBC), N-N'-Terephthaloyl-bis-caprolactam, Bisoxazoline, Diisocyanate, verkappte Diisocyanate, Carbodiimide, epoxy:funktionalisierte 5 Oligo- oder Polymere oder auf Carbonateinheiten basierende Additive.

Die bevorzugten kettenverlängernden Additive weisen mindestens 2 Carbonateinheiten pro Molekül auf, bevorzugt 5, mehr bevorzugt 10, weiter mehr bevorzugt 20, besonders bevorzugt 30 mehr besonders bevorzugt 40 und insbesondere bevorzugt mindestens 50 Carbonateinheiten pro Molekül.

Besonders bevorzugte kettenverlängernde Additive sind in WO 2000/066650 offenbart, insbesondere bevorzugt sind kettenverlängernde Additive Blockcopolymere der Formel PA.PC, wobei PA Polyamid und PC Polycarbonat bedeutet.

Das Polycarbonat weist mindestens 2 Carbonateinheiten auf, bevorzugt 10, mehr bevorzugt 20, weiter bevorzugt 30, besonders bevorzugt 40 und insbesondere mindestens 50. Bevorzugt weist das Polycarbonat 2 bis 100, besonders bevorzugt 30 bis 80 und insbesondere bevorzugt 40 bis 70 Carbonateinheiten auf.

Das Polyamid ist ein säureterminiertes Polyamid, wobei mindestens ein Terminus die Verbindung zum Polycarbonat herstellt.

Das kettenverlängernde Additiv weist bevorzugt 25 bis 75 Gew.-%, mehr bevorzugt 35 bis 65 Gew-% und insbesondere bevorzugt 45 bis 55 Gew.-% an Polycarbonat auf.

Bevorzugt weisen die Einheiten des Polyamids und des Polycarbonats etwa gleiche Molmassen auf, mehr bevorzugt weichen die Molmassen um weniger als 20 Gew.-% voneinander ab, mehr bevorzugt 15 Gew-%, besonders bevorzugt 10 Gew-% und insbesondere bevorzugt weniger als 5 Gew.-% voneinander ab.

Bevorzugt betragen die Molmassen der Blöcke 5000 bis 30000 g/mol, besonders bevorzugt 8000 bis 20000 g/mol und insbesondere bevorzugt 10000 bis 18000 g/mol.

Das kettenverlängernde Additiv wird in die nicht-aminterminierten Polyamide (B) eincompoundiert, bevorzugt beträgt die Konzentration des kettenverlängernden Additives in den nicht-aminterminierten Polyamiden (B) 2 bis 30 wt%, weiter bevorzugt 3 bis 25 wt%, mehr bevorzugt 4 bis 22 wt%, insbesondere bevorzugt 5 bis 20 wt%.

Mehr bevorzugt wird das kettenverlängernde Additiv in säureterminierten Polyamiden verwendet, besonders bevorzugt in säureterminierten Polyamiden mit einer Menge der Säureendgruppen von mindestens 50 mmol/kg, bevorzugt 60 mmol/kg, weiter bevorzugt 70 mmol/kg, besonders bevorzugt 80 mmol/kg, mehr besonders bevorzugt mindestens 90 mmol/kg, weiter mehr besonders bevorzugt mindestens 100 mmol/kg, insbesondere bevorzugt mindestens 110 mmol/kg, weiter insbesondere bevorzugt mindestens 120 mmol/kg, weiter mehr insbesondere bevorzugt mindestens 130 mmol/kg auf.

Der Term ($\varphi_A[NH_2]_A$ - $M[k]$) kann einen negativen oder positiven Wert annehmen. Bevorzugt wird die Konzentration an Kettenverlängerer so gewählt, dass der Term ($\varphi_A[NH_2]_A$ - $M[k]$) einen positiven Wert annimmt. Damit liegen dann die aminterminierten Polyamide (A) in Bezug auf ihre Amino-Endgruppen (Polyamid (A)) gegenüber den im Sinne der Kettenverlängerung aktiven Gruppen der Kettenverlängerer in einem Überschuss vor. Weiter bevorzugt beträgt der Wert des Terms ($\varphi_A[NH_2]_A$ - $M[k]$) zwischen 0,5 und 35, weiter mehr bevorzugt zwischen 1 und 30, besonders bevorzugt zwischen 2 und 25, weiter besonders bevorzugt zwischen 3 und 20 und insbesondere bevorzugt zwischen 4 und 15.

Sollte der Term ($\varphi_A[NH_2]_A$ - $M[k]$) einen negativen Wert annehmen, so wird dieser für die Berechnungen gleich null gesetzt.

Die theoretische zahlenmittlere Molmasse $M_n^{Amine,final}$ ist bevorzugt größer 40000 g/mol, bevorzugt größer 50000 g/mol, mehr bevorzugt größer 60000 g/mol, besonders bevorzugt größer 70000 g/mol, weiter besonders bevorzugt größer 80000 g/mol, mehr besonders bevorzugt größer 90000 g/mol und insbesondere bevorzugt größer 100000 g/mol.

Bevorzugt beträgt die theoretische zahlenmittlere Molmasse $M_n^{Amin\,final}$ maximal 500000 g/mol, mehr bevorzugt maximal 400000 g/mol, weiter mehr bevorzugt maximal 300000 g/mol, besonders bevorzugt maximal 200000 g/mol und insbesondere bevorzugt 100000 g/mol.

Bevorzugte erfindungsgemäße Zusammensetzungen weisen eine theoretische zahlenmittlere Molmasse $M_n^{Amin\,final}$ von 40000 bis 400000 g/mol auf und einen Spreizfaktor von mehr als 2,5 bis zu 30, mehr bevorzugt eine $M_n^{Amin\,final}$ von 50000 bis 300000 g/mol und einen Spreizfaktor von 2,5 bis 25, besonders bevorzugt eine $M_n^{Amin\,final}$ von 60000 bis 200000 g/mol und einen Spreizfaktor von 2,5 bis 25 und insbesondere bevorzugt eine $M_n^{Amin\,final}$ von 70000 bis 100000 g/mol und einen Spreizfaktor von 3,5 bis 15 auf.

Die erfindungsgemäßen multimodalen, hochviskosen Polyamid-Zusammensetzungen zeichnen sich durch einen hohen Spreizfaktor (S) aus.

Damit liegt auch eine Differenz der Molmassen der nicht-aminterminierten Polyamide (B) und der aminterminierten Polyamide (final) aus. Die aminterminierten Polyamide (final) sind die Summe aller aminterminierten Polyamide nach Reaktion der aminterminierten Polyamide (A) mit dem Kettenverlängerer.

Daraus ergeben sich gewisse Anteile an Dimeren oder Oligomeren, die zwei oder mehrere Moleküle aminterminierte Polyamide (A) verbrückt mit Hilfe des Kettenverlängeres aufweisen.

Der Wert X gemäß Formel 4 bezieht sich auf diese Betrachtung.

$$\text{Formel 4:} \qquad X = \frac{M_n^{Amine,final}}{M_n^{Amin,before}} = \frac{([NH_2]_A + [COOH]_A) * \varphi_A}{(\varphi_A [NH_2]_A - M[k]) + \varphi_A [COOH]_A}$$

mit

$\varphi_A =$ ist der Massen-Prozentsatz der aminterminierten Polyamide (A) bezogen auf die Massensumme der Polyamide (A) und (B)

$\varphi_B =$ ist der Massen-Prozentsatz der nicht-aminterminierten Polyamide (B) bezogen auf die Massensumme der Polyamide (A) und (B)

$[COOH]_A$ ist die Menge der Säureendgruppen in mmol/kg der Polyamide (A)

$[NH_2]_A$ ist die Menge der Aminoendgruppen in mmol/kg der Polyamide (A)

$[k] =$ Menge der aktiven Gruppen in mmol/kg des Kettenverlängerers

$M$ Massen-Prozentsatz des Kettenverlängerers, bezogen auf die Masse der Polyamide (A) und (B).

Die Prozentsätze betreffen Bruchteile und haben infolgedessen immer eine Größe unter 1. Die Summe $\varphi_A + \varphi_B$ ist bevorzugt 1.

Der Wert X der Formel 4 ist mindestens 1,5, bevorzugt größer 2, mehr bevorzugt größer 2,5, besonders bevorzugt größer 3, weiter besonders bevorzugt größer 5, mehr besonders bevorzugt größer 7 und insbesondere bevorzugt größer 10.

Der Wert X der Formel 4 ist bevorzugt höchstens als 20, mehr bevorzugt 18, besonders bevorzugt 16 und insbesondere bevorzugt höchstens 14.

Weiterhin bevorzugt ist der Wert X der Formel 4 bevorzugt 1,5 bis 20, mehr bevorzugt 2 bis 18, weiter mehr bevorzugt 3 bis 16 und insbesondere bevorzugt 7 bis 14.

Bevorzugt weisen die erfindungsgemäßen Polyamidzusammensetzungen einen Spreizfaktor (S) (der Formel 7) von 2,5 bis 30 und einen Wert X (der Formel 4) von 1,5 bis 20 auf, besonders bevorzugt einen Spreizfaktor von 2,5 bis 25 und einen Wert X (der Formel 4) von 2 bis 18 auf und insbesondere bevorzugt einen Spreizfaktor von 3,5 bis 15 und einen Wert X (der Formel 4) von 3 bis 16 auf.

Die theoretische zahlenmittlere Molmasse $M_n^{final}$ der erfindungsgemäßen hochviskosen, multimodalen Zusammensetzung wird nach Formel 3

Formel 3:
$$M_n^{final} = \frac{2*10^6}{(\varphi_A[NH_2]_A - M[k]) + \varphi_A[COOH]_A + \varphi_B[COOH]_B} \quad [g/mol]$$

berechnet, alle Angaben sind wie oben definiert.

Diese theoretische zahlenmittlere Molmasse ($M_n^{final}$) ist erfindungsgemäß bevorzugt größer als 29000 g/mol, weiter bevorzugt größer 32000 g/mol, mehr bevorzugt größer 34000 g/mol, besonders bevorzugt größer 36000 g/mol, weiter besonders bevorzugt größer 38000 g/mol, mehr besonders bevorzugt größer 40000 g/mol und insbesondere bevorzugt größer 42000g/mol.

Die Bestimmungen von Mw und Mn sind dem Fachmenschen bekannt, bevorzugt werden sie mittels GPC des Polyamidanteils bestimmt, besonders bevorzugt wie unten beschrieben. Sie stellen damit experimentelle Daten des erfindungsgemäßen Produktes dar. Der PDI als der Quotient von Mw und Mn ist damit ein ebenfalls experimentell bestimmter Wert.

Gemäß PDI = Mw/Mn lässt sich der tatsächliche Polydispersitätsindex direkt aus experimentellen Daten bestimmen. Erfindungsgemäß ist der PDI mindestens 2,2 , bevorzugt mindestens 2,3, mehr bevorzugt mindestens 2,5, weiter bevorzugt mindestens 3 mehr bevorzugt mindestens 3,5, weiter mehr bevorzugt mindestens 4, besonders bevorzugt mindestens 4,5 und insbesondere bevorzugt mindestens 4,9.

Maximalwerte für den PDI sind 15, bevorzugt 12, mehr bevorzugt 9, besonders bevorzugt 6. Bevorzugt liegt der PDI von 2,3 bis 15, mehr bevorzugt von 2,5 bis 12, besonders bevorzugt von 3 bis 9 und insbesondere bevorzugt von 4 bis 6.

Optional enthalten die erfindungsgemäßen Polyamid-Formmassen übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Optional enthalten die erfindungsgemäßen Polyamid-Formmassen neben den beschriebenen Komponenten weitere Zusätze ausgewählt aus einem oder mehreren Vertretern, optional auch mehreren der gleichen Art wie Stabilisatoren, andere Polymere, Schlagzähmodifier, Weichmacher, Färbemittel wie Pigmente und Farbstoffe, Verarbeitungshilfsmittel.

Geeignete Oxidationsstabilisatoren sind aromatische Amine, sterisch gehinderte Phenole, Hydrochinone, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Naugard 445, Irganox 1010, Irganox 1098, Irgafos 168, P-EPQ oder Lowinox DSTDP. Im Allgemeinen enthalten die Formmassen etwa 0,01 bis etwa 2 Gew.-% und bevorzugt etwa 0,1 bis etwa 1,5 Gew.-% Oxidationsstabilisatoren.

Darüber hinaus können die Formmassen auch UV-Stabilisatoren bzw. Lichtstabilisatoren enthalten. Geeignete UV-Stabilisatoren sind organische UV-Absorber, beispielsweise Benzophenonderivate, Benzotriazolderivate, Resorcine, Salicylate, Oxalanilide und Phenyltriazine. Lichtstabilisatoren vom HALS-Typ sind Tetramethylpiperidinderivate. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Weiterhin können die Formmassen Hydrolysestabilisatoren enthalten wie etwa monomere, oligomere oder polymere Carbodiimide oder Bisoxazolin.

Andere Polymere, die als Zusatz in den Formmassen enthalten sein können, sind beispielsweise Polyetheramide oder Polytetrafluorethylen (PTFE).

Schlagzähmodifizierer sind dem Fachmenschen bekannt. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Weichmacher sind dem Fachmenschen aus Gächter/Müller, Kunststoffadditive, C. Hanser Verlag, 2. Ausgabe, S. 296 bekannt. Als Weichmacher geeignete, übliche Verbindungen sind sogenannte niedermolekulare Weichmacher wie z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure. Mehr bevorzugte Weichmacher sind unter anderem p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid.

Geeignete Pigmente und/oder Farbstoffe sind beispielsweise Mischoxide, Titandioxid, Eisenoxid, Zinksulfid, Ultramarin, Nigrosin, organische Pigmente, wie Phthalocyanine, Chinacridone, Perylene, Nigrosin, Anthrachinone, Perlglanzpigmente.

Geeignete Verarbeitungshilfsmittel sind beispielsweise Paraffine, Fettalkohole, Fettsäureamide, Stearate wie Calciumstearat, Paraffinwachse, Montanate oder Polysiloxane. Bevorzugt enthalten die erfindungsgemäßen Polyamid-Formmassen 0,01 bis 2 Gew.-%, besonders bevorzugt 0,05 bis 1,5 Gew.-% und insbesondere bevorzugt 0,1 bis 1 Gew.-% an Verarbeitungsmittel.

Bevorzugt weisen die erfindungsgemäßen Polyamid-Formmassen jedoch keine Schlagzähmodifizierer auf.

Bevorzugt weisen die erfindungsgemäßen Polyamid-Formmassen keine Weichmacher auf, mehr bevorzugt keine niedermolekularen Weichmacher und insbesondere kein BBSA.

Mehr bevorzugt weisen die erfindungsgemäßen Polyamid-Formmassen weder Schlagzähmodifizierer noch Weichmacher auf.

Bevorzugt weisen die erfindungsgemäßen Polyamid-Formmassen Polyamide mit einer mittleren numerischen Molmasse $M_n$, gemessen mittels GPC, von mindestens 45000 g/mol auf, weiter bevorzugt von 50000 g/mol, mehr bevorzugt von 55000 g/mol, weiter mehr bevorzugt von 60000 g/mol, besonders bevorzugt von 65000 g/mol und insbesondere von mindestens 70000 g/mol auf.

Bevorzugt weisen die erfindungsgemäßen Polyamid-Formmassen Polyamide mit einer mittleren numerische Molmasse $M_n$, gemessen mittels GPC, von mindestens 50000 g/mol und einen PDI von 2,3 bis 15 auf, besonders bevorzugt eine $M_n$ von mindestens 60000 g/mol und einen PDI von 2,5 bis 12 und insbesondere bevorzugt eine $M_n$ von mindestens 70000 g/mol und einen PDI von 3 bis 9 auf.

Bevorzugt weisen die erfindungsgemäßen Polyamid-Formmassen auf Basis von PA11 oder PA 12 eine mittlere numerische Molmasse $M_n$, gemessen mittels GPC, von mindestens 50000 g/mol auf, mehr bevorzugt von 55000 g/mol, weiter mehr bevorzugt von 60000 g/mol, besonders bevorzugt von 65000 g/mol und insbesondere von mindestens 70000 g/mol auf.

Bevorzugt weisen die erfindungsgemäßen Polyamid-Formmassen auf Basis von PA11 oder PA12 eine mittlere numerische Molmasse $M_n$, gemessen mittels GPC, von mindestens 50000 g/mol und einen PDI von 2,3 bis 15 auf, besonders bevorzugt eine $M_n$ von mindestens 60000 g/mol und einen PDI von 2,5 bis 12 und insbesondere bevorzugt eine $M_n$ von mindestens 70000 g/mol und einen PDI von 3 bis 9 auf.

Die erfindungsgemäßen hochviskosen, multimodalen Polyamid-Formmassen können zur Herstellung von Formkörpern enthaltend diese Polyamid-Formmassen verwendet werden.

Die Charpy-Kerbschlagzähigkeit der Formkörper nimmt aufgrund der Verwendung der kettenverlängernden Additive zu.

Wie in den Beispielen gezeigt ist dieser Effekt an Formkörpern bestehend aus den erfindungsgemäßen hochviskosen, multimodalen Polyamid-Formmassen, ihrerseits bestehend aus den erfindungsgemäßen hochviskosen, multimodalen Polyamid-Zusammensetzungen, (ggf. unter Verwendung einer winzigen Menge von 0,1 Gew.% bezogen auf die Gesamtzusammensetzung an Entformungsmittel, welches bevorzugt Calciumstearat ist) {im Folgenden als "bestehend aus den bezeichnet} zu beobachten, indem diese mit Formkörpern verglichen werden, die aus den entsprechenden Basispolymeren (BP) hergestellt wurden. Aus den Charpy-Kerbschlagzähigkeiten wird ein Quotient, der Charpy-Faktor ( $CF^{final}$ ), nach folgender Formel berechnet:

$$\text{Formel CF:} \qquad CF^{final} = \frac{CK^{final}}{\varphi_A * CK_A^{before} + \varphi_B * CK_B^{before}}$$

mit

$CK_A^{before}$    Charpy Kerbschlagzähigkeit eines Formkörpers bestehend aus den aminterminierten Polyamiden (A)

$CK_B^{before}$    Charpy Kerbschlagzähigkeit eines Formkörpers bestehend aus den nicht-aminterminierten Polyamiden (B)

$\varphi_A$ und $\varphi_B$ sind die massenbezogenen Prozentsätze (wie in Formel 3 definiert) der Polyamide (A) und (B) des Formkörpers bestehend aus erfindungsgemäßen hochviskosen, multimodalen Polyamid-Zusammensetzungen, dieser Formkörper weist die Charpy Kerbschlagzähigkeit $CK^{final}$ auf.

Der Charpy-Faktor für Messungen bei 0°C ($CF^{final}$) ist größer als 2, bevorzugt größer als 3, weiter mehr bevorzugt größer 4, besonders bevorzugt größer 5 und insbesondere bevorzugt größer als 6. Ein möglicher Höchstwert könnte 10 sein.

Die Charpy-Faktoren werden, inklusive aller Subterme und Größen, mit 2 Nachkommastellen berechnet und abschließend auf natürliche Zahlenwerte gerundet.

Bevorzugt weisen Formkörper bestehend aus den erfindungsgemäßen hochviskosen, multimodalen Polyamid-Formmassen/Zusammensetzungen eine Charpy-Kerbschlagzähigkeit bei 0°C von mindestens 25 kJ/m$^2$ aufweisen, mehr bevorzugt von mindestens 30 kJ/m$^2$, besonders bevorzugt von mindestens 35 kJ/m$^2$, insbesondere bevorzugt von mindestens 40 kJ/m$^2$ auf.

Bevorzugte Formkörper bestehend aus den erfindungsgemäßen hochviskosen, multimodalen Polyamid-Formmassen/Zusammensetzungen mit einer mittleren numerischen Molmasse $M_n$, gemessen mittels GPC, von mindestens 50000 g/mol weisen eine Charpy-Kerbschlagzähigkeit bei 0°C von mindestens 25 kJ/m$^2$ auf; mehr bevorzugte Formkörper bestehend aus den erfindungsgemäßen hochviskosen, multimodalen Polyamid-Formmassen/Zusammensetzungen mit einer mittleren numerischen Molmasse $M_n$, gemessen mittels GPC, von mindestens 60000 g/mol weisen eine Charpy-Kerbschlagzähigkeit bei 0°C von mindestens 30 kJ/m$^2$ auf; besonders bevorzugte Formkörper bestehend aus den erfindungsgemäßen hochviskosen, multimodalen Polyamid-Formmassen/Zusammensetzungen mit einer mittleren numerischen Molmasse $M_n$, gemessen mittels GPC, von mindestens 65000 g/mol weisen eine Charpy-Kerbschlagzähigkeit bei 0°C von mindestens 35 kJ/m$^2$ auf; insbesondere bevorzugte Formkörper bestehend aus den erfindungsgemäßen hochviskosen, multimodalen Polyamid-Formmassen/Zusammensetzungen mit einer mittleren numerischen Molmasse $M_n$, gemessen mittels GPC, von mindestens 70000 g/mol eine Charpy-Kerbschlagzähigkeit bei 0°C von mindestens 40 kJ/m$^2$ auf.

Bevorzugt weisen Formkörper bestehend aus den erfindungsgemäßen hochviskosen, multimodalen Polyamid-Formmassen/Zusammensetzungen, deren Polyamide zu mehr als 80 Gew.-%, bevorzugt mehr als 90 Gew.-%, besonders bevorzugt mehr als 95 Gew.-% aus PA11 oder PA12 bestehen (auf Basis von PA11 oder PA12), eine Charpy-Kerbschlagzähigkeit bei 0°C von mindestens 25 kJ/m$^2$ aufweisen, mehr bevorzugt von mindestens 30 kJ/m$^2$, besonders bevorzugt von mindestens 35 kJ/m$^2$, insbesondere bevorzugt von mindestens 40 kJ/m$^2$.

Bevorzugt weisen Formkörper bestehend aus den erfindungsgemäßen hochviskosen, multimodalen Polyamid-Formmassen/Zusammensetzungen auf Basis von PA11 oder PA12, optional mit 0,1 Gew.-% Calciumstearat als Entformungsmittel, mit einer mittleren numerischen Molmasse $M_n$, gemessen mittels GPC, von mindestens 50000 g/mol eine Charpy-Kerbschlagzähigkeit bei 0°C von mindestens 25 kJ/m$^2$ auf; mehr bevorzugt weisen Formkörper bestehend aus den erfindungsgemäßen hochviskosen, multimodalen Polyamid-Formmassen/Zusammensetzungen mit einer mittleren numerischen Molmasse $M_n$, gemessen mittels GPC, von mindestens 60000 g/mol eine Charpy-Kerbschlagzähigkeit bei 0°C von mindestens 30 kJ/m$^2$ auf; besonders bevorzugt weisen Formkörper aus den erfindungsgemäßen hochviskosen, multimodalen Polyamid-Formmassen/Zusammensetzungen mit einer mittleren numerischen Molmasse $M_n$, gemessen mittels GPC, von mindestens 65000 g/mol eine Charpy-Kerbschlagzähigkeit bei 0°C von mindestens 35 kJ/m$^2$ auf; insbesondere bevorzugt weisen Formkörper aus den erfindungsgemäßen hochviskosen, multimodalen Polyamid-Formmassen/Zusammensetzungen mit einer mittleren numerischen Molmasse $M_n$, gemessen mittels GPC, von mindestens 70000 g/mol eine Charpy-Kerbschlagzähigkeit bei 0°C von mindestens 40 kJ/m$^2$ auf.

Methoden:

Gelpermeationschromatographie (GPC)

Die GPC Analysen erfolgten mit einer modular aufgebauten Agilent Anlage. Hierzu gehören Pumpe, Autosampler und Säulenkombinationen (PSG-Säulen) und Detektoren (RI und UV- Detektor). Die Proben werden mit einer Konzentration von c = 5 g/l in Hexafluoroisopropanol (HFIP) unter Zusatz von 0,05 mol/l Kaliumtrifluoroacetat gelöst. Die Messungen werden mit HFIP und 0,05 mol/l Kaliumtrifluoroacetat bei einer Flussrate von 0,8 ml/min mit RI-Detektion gefahren.

Die Kalibrierkurve wird mit 12 eng verteilten PMMA Standards vorgenommen (Mp zwischen 505 g/mol und 4.000.000 g/mol).

Ausgewertet werden ausschließlich Signale, die einer Molmasse von mindestens 1000 g/mol entsprechen.

Bestimmung der Viskosität nach ISO 307:2019

Die relative Lösungsviskosität $\eta_{rel}$ wird bei 25°C an einer 0,5 % (Masse) Lösung in m-Kresol bestimmt.

<u>Endgruppenbestimmungen</u>

Carboxylatendgruppen:

2,0 g (Erwartungswert unter 15 mmol/kg), bzw. 1,0 g (Erwartungswert über 15 mmol/kg) der Probe werden in einem Wägebehälter eingewogen. Ca. 40 ml (bzw. 20 ml) Benzylalkohol werden in das thermostatisierte Titrationsgefäß vorgelegt. Anschließend wird die Probe in Benzylalkohol überführt und unter Inertgas unter Rühren die Probe gelöst. Die Lösezeit beträgt 10 min (bzw. 15 min).

Nach dem Lösen werden 3 Tropfen Indikatorlösung zugegeben und zügig mit Kalilauge (KOH in Wasser) (Konzentration 0,1 mol/l) titriert.

Aminoendgruppen:
0,5 g der Probe werden eingewogen und mit 50 ml m-Kresol versetzt. Die Probe wird unter Erwärmung auf 100°C innerhalb einer Stunde gelöst (ggf. wird eine Temperatur von 140°C verwendet). Nach Abkühlung auf Raumtemperatur werden 5 ml Methanol zugegeben und die potentiometrische Titration gestartet. Zur Auswertung wird ein Blindwert der Lösemittelmischung subtrahiert.
Die Bestimmung der inerten Endgruppen erfolgt mittels NMR-Spektroskopie, insbesondere durch gekoppelte Proton-Kohlenstoff-Methoden.
Messwerte zur Charpy Kerbschlagzähigkeit, kurz "Charpy" wurden gemäß DIN 179 1-eA) ermittelt.

Tabelle 1a: Charakterisierung der Basispolymere, Mn berechnet aus den Endgruppen, BP bedeutet Basispolymer

|  | Typ | $NH_2$ End-Gruppen [mmol/kg] | COOH End-Gruppen [mmol/kg] | Molmasse Mn [g/mol] |
|---|---|---|---|---|
| BP1 | PA12 | 50 | 7 | 35087,7 |
| BP2 | PA12 | 3 | 120 | 16260,2 |
| BP3 | PA12 | 120 | 3 | 16260,2 |
| BP4 | PA1012 | 8 | 97 | 19047,6 |
| BP5 | PA1012 | 134 | 6 | 14285,7 |

Beispiel 1: Allgemeine Arbeitsvorschrift zur Herstellung der Polyamid-Zusammensetzungen

Die Formmassen wurden auf einem gleichläufigen Doppelschnecken-Extruder mit 250 Umdrehungen/Minute hergestellt. Die festen Komponenten wurden über den Haupteinzug und die flüssigen Komponenten wurden downstream in die Schmelze bei 240°C dosiert, der Massendurchsatz betrug 15 kg/h. Die Granulierung erfolgte per Stranggranulierung mit anschließender Trocknung in einem Trockenluftkammertrockner 12 Stunden lang bei 80°C.

Tabelle 2: Zusammensetzung der erfindungsgemäßen Polyamid-Zusammensetzungen vor der Herstellung von Formkörpern, Angaben in [wt%]

|  | BP (A) Amin | BP (B) Säure | $\varphi_A$ | $\varphi_B$ | M1251 in BP Säure | M1251 in Gesamt |
|---|---|---|---|---|---|---|
| Ex1 | BP1 | BP2 | 90 | 10 | 9,0 | 0,9 |
| Ex2 | BP1 | BP2 | 70 | 30 | 5,4 | 1,6 |
| Ex3 | BP3 | BP2 | 80 | 20 | 20,0 | 4,0 |
| Ex4 | BP3 | BP2 | 80 | 20 | 15,0 | 3,0 |
| Ex5 | BP3 | BP2 | 70 | 30 | 9,0 | 2,7 |
| Ex6 | BP3 | BP2 | 70 | 30 | 13,0 | 3,9 |
| Ex7 | BP3 | BP2 | 60 | 40 | 8,0 | 3,2 |
| Ex8 | BP5 | BP4 | 70 | 30 | 14,0 | 4,2 |

Tabelle 3a: Molekulare Werte der erfindungsgemäßen Zusammensetzungen Angaben der Molmassen in g/mol, GPC: gemessene Werte der Produkte, berechnete Werte: $M_n^{final}$ nach Formel 3, $M_n^{Amin,final}$ nach Formel 1, Spreizfaktor nach Formel 7, X-mer nach Formel 4

|  | M1251 | GPC | | | berechnete Werte | | | |
|---|---|---|---|---|---|---|---|---|
|  |  | Mn | Mw | PDI | $M_n^{final}$ | $M_n^{Amin,final}$ | Spreizfaktor | X-mer |
| Ex1 | 0,9 | 60900 | 140000 | 2,30 | 44150,1 | 54054 | 3,32 | 1,54 |
| Ex2 | 1,6 | 56300 | 173800 | 3,10 | 45977,0 | 186667 | 11,48 | 5,32 |

(fortgesetzt)

| | M1251 | GPC | | | berechnete Werte | | | |
| | | Mn | Mw | PDI | $M_n^{final}$ | $M_n^{Amin,final}$ | Spreizfaktor | X-mer |
|---|---|---|---|---|---|---|---|---|
| Ex3 | 4,0 | 79200 | 399500 | 5,00 | 47269,8 | 86956,5 | 5,3 | 5,3 |
| Ex4 | 3,0 | 46800 | 101600 | 2,20 | 32051,3 | 41666,7 | 2,6 | 2,6 |
| Ex5 | 2,7 | 56500 | 130700 | 2,32 | 29368,6 | 43614 | 2,68 | 2,68 |
| Ex6 | 3,9 | 70500 | 279400 | 3,96 | 45351,47 | 172840 | 10,63 | 10,63 |
| Ex7 | 3,2 | 54600 | 164900 | 3,00 | 34602,1 | 122449,0 | 7,5 | 7,5 |
| Ex8 | 4,2 | 71000 | 345900 | 4,90 | 46728,97 | 100000 | 4,80 | 7,00 |

Tabelle 3b: Molekulare Werte von Zusammensetzung der EP 1690889 A1, die Menge an M1251 sind Gew.-% bezogen auf die Gesamtmasse, wie in Tabelle 2.

| | | M1251 [%] | berechnete Werte | | |
| | | | $M_n^{final}$ | $M_n^{Amin,final}$ | Spreizfaktor (S) |
|---|---|---|---|---|---|
| EP1690889 | Beispiel 1 | 0,6 | 46082,9 | 52282,1 | 1,5 |

Gemessene GPC-Daten sind in EP 1690889 A1 nicht publiziert worden, es finden sich auch keine mit Hilfe einer anderen Methode bestimmten Daten zu Mn und Mw, damit kann die Polydispersität (PDI) nicht berechnet werden.

Aus Tabelle 3a ist ersichtlich, dass aus den berechneten Daten insbesondere für Mw, keine Abschätzung vorgenommen werden kann. Damit ist der beanspruchte PDI im Stand der Technik nicht offenbart.

Weiterhin liegt der Spreizfaktor außerhalb des beanspruchten Bereichs.

Beispiel 2: Herstellung der Formkörper/Prüfkörper

Die Prüfkörper wurden mittels Spritzgussverfahren hergestellt. Die Formmassentemperatur betrug zwischen 235 und 255°C, die Düsentemperatur betrug zwischen 55 und 83°C und die Verweilzeit betrug zwischen 49 und 59 Sekunden.

Die Messwerte zur Charpy Kerbschlagzähigkeit, kurz "Charpy" wurden gemäß DIN 179 1-eA) ermittelt

Tabelle 4: Charpy Kerbschlagzähigkeit bei 0°C von Prüflingen bestehend aus den Basispolymeren

| | Charpy [kJ/m$^2$] 0 °C |
|---|---|
| BP1 | 7,09 |
| BP2 | 4,15 |
| BP4 | 11,75 |
| BP5 | 9,08 |

Tabelle 5: Charpy Kerbschlagzähigkeit und Charpyfaktoren bei 0°C von Prüflingen gemäß Beispiel 2

| | Charpy [kJ/m$^2$] 0 °C | Charpyfaktor 0°C | CF |
|---|---|---|---|
| Ex1 | 45,45 | 6,69 | 7 |
| Ex2 | 43,26 | 6,97 | 7 |
| Ex3 | 55,0 | 11,88 | 12 |
| Ex4 | 56,0 | 12,10 | 12 |
| Ex5 | 41,62 | 9,11 | 9 |
| Ex6 | 43,56 | 9,53 | 10 |
| Ex7 | 25,0 | 5,54 | 6 |
| Ex8 | 28,45 | 2,88 | 3 |

**Patentansprüche**

1. Hochviskose, multimodale Polyamid-Zusammensetzungen, die eine zahlenmittlere Molmasse ( $M_n^{final}$ ) von mindestens 26000 g/mol aufweisen, bestehend aus:

   a) Mindestens einem aminterminierten Polyamid (final) mit einem Faktor X-mer von mindestens 1,5, wobei die aminterminierten Polyamide (final) das Reaktionsprodukt der aminterminierten Polyamide(A) mit einen Kettenverlängerer darstellen,
   b) mindestens ein nicht aminterminiertes Polyamid (B), wobei die Polyamid-Zusammensetzung einen Polydispersitätsindex berechnet nach PDI = Mw / Mn einen Wert von mindestens 2,2 aufweist, Mw und Mn werden dafür mittels GPC des Polyamidanteils der Zusammensetzung bestimmt,

   • wobei die zahlenmittlere Molmasse ( $M_n^{final}$ ) nach der folgenden Formel 3 bestimmt wird

   $$\text{Formel 3:} \quad M_n^{final} = \frac{2*10^6}{(\varphi_A[NH_2]_A - M[k]) + \varphi_A[COOH]_A + \varphi_B[COOH]_B} \quad [g/mol]$$

   mit

   $\varphi_A$ = ist der Massen-Prozentsatz der aminterminierten Polyamide (A) bezogen auf die Massensumme der Polyamide (A) und (B)
   $\varphi_B$ = ist der Massen-Prozentsatz der nicht-aminterminierten Polyamide (B) bezogen auf die Massensumme der Polyamide (A) und (B)
   $[COOH]_A$ ist die Menge der Säureendgruppen in mmol/kg der Polyamide (A)
   $[COOH]_B$ ist die Menge der Säureendgruppen in mmol/kg der Polyamide (B)
   $[NH_2]_A$ ist die Menge der Aminoendgruppen in mmol/kg der Polyamide (A)
   $[k]$ = Menge der aktiven Gruppen in mmol/kg des Kettenverlängerers
   $M$ Massen-Prozentsatz des Kettenverlängerers bezogen auf die Masse der Polyamide (A) und (B),
   o wobei die Prozentsätze Bruchteile betreffen und infolgedessen immer eine Größe unter 1 haben; die Summe $\varphi_A + \varphi_B$ ist bevorzugt gleich 1,

   • wobei der Wert der Größe X-mere nach folgender Formel 4 berechnet wird

   $$\text{Formel 4:} \quad X = \frac{M_n^{Amine,final}}{M_n^{Amin,before}} = \frac{([NH_2]_A + [COOH]_A)* \varphi_A}{(\varphi_A[NH_2]_A - M[k]) + \varphi_A[COOH]_A}$$

   mit den Definitionen der Variablen wie vorstehend angegeben,
   o wobei $M_n^{Amin,before}$ über die Bestimmung der Endgruppen der aminterminierten Polyamide (A) nach Formel 5 berechnet wird

   $$\text{Formel 5:} \quad M_n^{Amin,before} = \frac{2*10^6}{[NH_2]_A + [COOH]_A}[g/mol]$$

2. Hochviskose, multimodale Polyamid-Zusammensetzungen nach Anspruch 1, wobei der PDI von 2,3 bis 15, mehr bevorzugt von 2,5 bis 12, besonders bevorzugt von 3 bis 9 und insbesondere bevorzugt von 4 bis 6 beträgt.

3. Hochviskose, multimodale Polyamid-Zusammensetzungen nach einem der Ansprüche 1 oder 2, wobei der Wert X der Formel 4 größer 1,5 ist, bevorzugt größer 2, mehr bevorzugt größer 2,5, weiter mehr bevorzugt größer 3, besonders bevorzugt größer 5, weiter besonders bevorzugt größer 7 und insbesondere bevorzugt größer 10.

4. Hochviskose, multimodale Polyamid-Zusammensetzungen nach einem der Ansprüche 1 bis 3, wobei die Polyamidzusammensetzungen einen Spreizfaktor (S) von 2,5 bis 30 und einen Wert X der Formel 4 von 1,5 bis 20 aufweisen, bevorzugt einen Spreizfaktor von 2,5 bis 25 und einen Wert X der Formel 4 von 2 bis 18 und insbesondere bevorzugt einen Spreizfaktor von 3,5 bis 15 und einen Wert X der Formel 4 von 3 bis 16.

5. Verfahren zur Herstellung von hochviskosen, multimodalen Polyamid-Zusammensetzungen nach einem der Ansprüche 1 bis 4, deren Polyamidanteil dadurch hergestellt wird, dass

a) Mindestens ein aminterminiertes Polyamid (A) bereitgestellt wird,
b) Mindestens ein nicht aminterminierte Polsyamid (B) bereitgestellt wird, denen ein Kettenverlängerer zugesetzt wird,
c) die Polyamide (A) und (B) so ausgewählt sind, dass ein Spreizfaktor (S) von 2,5 überschritten wird,

wobei der Spreizfaktor durch Division der zahlenmittleren Molmasse ( $M_n^{Amin,final}$ ) (Formel 1) mit der zahlenmittleren Molmasse $M_n^B$ (Formel 2) der verwendeten nicht-aminterminierten Polyamide (B) ermittelt wird,

• wobei die zahlenmittlere Molmasse ( $M_n^{Amin,final}$ ) nach der Formel 1 berechnet wird

Formel 1: $$M_n^{Amin,final} = \frac{2*10^6 * \varphi_A}{(\varphi_A[NH_2]_A - M[k]) + \varphi_A[COOH]_A} \ [g/mol]$$

mit

$\varphi_A$ = ist der Massen - Prozentsatz der aminterminierten Polyamide (A) bezogen auf die Massensumme der Polyamide (A) und (B)
$\varphi_B$ = ist der Massen - Prozentsatz der nicht-aminterminierten Polyamide (B) bezogen auf die Massensumme der Polyamide (A) und (B)
$[COOH]_A$ ist die Menge der Säureendgruppen in mmol/kg der Polyamide (A)
$[NH_2]_A$ ist die Menge der Aminoendgruppen in mmol/kg der Polyamide (A)
$[k]$ = Menge der aktiven Gruppen in mmol/kg des Kettenverlängerers
$M$ Massen - Prozentsatz des Kettenverlängerers bezogen auf die Masse der Polyamide (A) und (B),

• wobei $M_n^B$ über die Bestimmung der Endgruppen nach Formel 2 berechnet wird,

Formel 2: $$M_n^B = \frac{2*10^6}{[NH_2]_B + [COOH]_B} \ [g/mol]$$

mit

$[COOH]_B$ ist die Menge der Säureendgruppen in mmol/kg der Polyamide (B)
$[NH_2]_B$ ist die Menge der Aminoendgruppen in mmol/kg der Polyamide (B)

d) die Komponenten in einem geeigneten Gerät gemeinsam unter Mischen erhitzt werden,

wobei die Prozentsätze Bruchteile betreffen und infolgedessen immer eine Größe unter 1 haben; die Summe $\varphi_A + \varphi_B$ ist bevorzugt gleich 1,
sowie gegebenenfalls weitere Komponenten verwendet werden können, als auch weitere Verfahrenschritte durchgeführt werden können.

6. Verfahren nach Anspruch 5, wobei der Spreizfaktor von mehr als 2,5 bis 30, mehr bevorzugt von 3 bis 25, besonders bevorzugt von 3,5 bis 20 und insbesondere bevorzugt von 4 bis 15 beträgt.

7. Verfahren nach Anspruch 5 oder 6, wobei die theoretische zahlenmittlere Molmasse $M_n^{Amin\,final}$ größer 40000 g/mol, bevorzugt größer 50000 g/mol, mehr bevorzugt größer 60000 g/mol, besonders bevorzugt größer 70000 g/mol, weiter besonders bevorzugt größer 80000 g/mol, mehr besonders bevorzugt größer 90000 g/mol und insbesondere bevorzugt größer 100000g/mol ist.

8. Verfahren nach einem der Ansprüche 5 bis 7, wobei die Polyamide der Zusammensetzungen säureterminierte Polyamide (B) aufweisen, deren Menge an Säureendgruppen größer oder gleich der Menge der Aminoendgruppen der aminterminierten Polyamide (A) ist, bevorzugt ist die Menge an Säureendgruppen der säureterminierten Polyamide größer als die Menge der Aminoendgruppen der aminterminierten Polyamide.

9. Verfahren nach einem der Ansprüche 5 bis 8, wobei der Kettenverlängerer in die nicht-aminterminierten Polyamide eincompoundiert wird, dabei beträgt die Konzentration des kettenverlängernden Additives in den nicht-aminterminierten Polyamiden (B) 2 bis 30 wt%, weiter bevorzugt 3 bis 25 wt%, mehr bevorzugt 4 bis 22 wt%, insbesondere bevorzugt 5 bis 20 wt%.

10. Polyamid-Formmassen enthaltend die hochviskosen, multimodalen Polyamid-Zusammensetzungen nach einem der Ansprüche 1 bis 4 oder die Verfahrensprodukte einem der Ansprüche 5 bis 9 zu mindestens 50 Gew.-%, bevorzugt zu mindestens 60 Gew.-%, mehr bevorzugt zu mindestens 70 Gew.-%, besonders bevorzugt mindestens 80 Gew.-%, weiter besonders bevorzugt mindestens 90 Gew.-%, mehr besonders bevorzugt mindestens 95 Gew.-% und insbesondere bevorzugt zu mindestens 99 Gew.-%.

11. Polyamid-Formmassen nach Anspruch 10, wobei die Polyamid- Formassen keinen Weichmacher enthalten, insbesondere kein BBSA.

12. Polyamid-Formmassen nach einem der Ansprüche 10 oder 11, wobei die Polyamid-Formmassen keinen Schlagzähmodifizierer enthalten.

13. Formkörper bestehend aus den erfindungsgemäßen hochviskosen, multimodalen Polyamid-Formmassen der Ansprüche 10 bis 12, optional unter Verwendung einer Menge von 0,1 Gew.-% bezogen auf die Gesamt-Formmasse an Entformungsmittel, welches bevorzugt Calciumstearat ist, weisen einen Charpy-Faktor (*CF$^{final}$*) nach folgender Formel CF auf

$$\text{Formel CF:} \qquad CF^{final} = \frac{CK^{final}}{\varphi_A * CK_A^{before} + \varphi_B * CK_B^{before}}$$

mit

$CK_A^{before}$   Charpy Kerbschlagzähigkeit eines Formkörpers bestehend aus den aminterminierten Polyamiden und

$CK_B^{before}$   Charpy Kerbschlagzähigkeit eines Formkörpers bestehend aus den nicht-aminterminierten Polyamiden,

$\varphi_A$ und $\varphi_B$ sind die massenbezogenen Prozentsätze (wie in Formel 3 definiert) der Polyamide (A) und (B) des Formkörpers bestehend aus erfindungsgemäßen hochviskosen, multimodalen Polyamid-Formmassen, dieser Formkörper weist die Charpy Kerbschlagzähigkeit $CK^{final}$ auf; der Charpy-Faktor für Messungen bei 0°C (*CF$^{final}$*) ist größer als 2, bevorzugt größer als 3, mehr bevorzugt größer 4, besonders bevorzugt größer 5 und insbesondere bevorzugt größer als 6.

14. Formkörper nach der Anspruch 13, die eine Charpy Kerbschlagzähigkeit $CK^{final}$ bei 0°C von größer 25 kJ/m$^2$, bevorzugt von größer 30 kJ/m$^2$, mehr bevorzugt von größer 35 kJ/m$^2$, besonders bevorzugt von größer 40 kJ/m$^2$ aufweisen.

15. Verwendung der erfindungsgemäßen Formkörper als Beschichtung, Abdeckung, Folie, Profil, Rohr, Wellrohr, Hohlkörper, Dichtung, Verkleidung, Halterung, Gehäuse, Ummantelung, Elektro- und Elektronikbauteile.

Europäisches
Patentamt

European
Patent Office

Office européen
des brevets

# EUROPÄISCHER RECHERCHENBERICHT

Nummer der Anmeldung

EP 24 16 7156

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 1 690 889 A1 (DEGUSSA [DE]) 16. August 2006 (2006-08-16) | 1-3, 10-15 | INV. C08L77/02 C08L77/06 |
| A | * Beispiel 1 * * Tabellen 1-2 * * Ansprüche * ----- | 4-9 | |
| A | WO 2006/079890 A1 (EMS CHEMIE AG [CH]; HOFFMANN BOTHO [CH] ET AL.) 3. August 2006 (2006-08-03) * Ansprüche * * Beispiele * ----- | 1-15 | |

**RECHERCHIERTE SACHGEBIETE (IPC)**

C08L

Der vorliegende Recherchenbericht wurde für alle Patentansprüche erstellt

| Recherchenort | Abschlußdatum der Recherche | Prüfer |
|---|---|---|
| München | 13. September 2024 | Mader, Margarita |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 16 7156

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2024

| Im Recherchenbericht angeführtes Patentdokument | Datum der Veröffentlichung | Mitglied(er) der Patentfamilie | Datum der Veröffentlichung |
|---|---|---|---|
| EP 1690889 A1 | 16-08-2006 | AT E402214 T1 | 15-08-2008 |
| | | BR PI0600531 A | 03-10-2006 |
| | | CN 1861684 A | 15-11-2006 |
| | | DE 102005007035 A1 | 17-08-2006 |
| | | EP 1690889 A1 | 16-08-2006 |
| | | JP 4908866 B2 | 04-04-2012 |
| | | JP 2006225660 A | 31-08-2006 |
| | | KR 20060092120 A | 22-08-2006 |
| | | RU 2006104308 A | 20-09-2007 |
| | | US 2006182916 A1 | 17-08-2006 |
| WO 2006079890 A1 | 03-08-2006 | EP 1841824 A1 | 10-10-2007 |
| | | WO 2006079890 A1 | 03-08-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200607989 A1
- EP 1690889 A1
- EP 3296345 A1
- WO 2000066650 A
- EP 0683210 A
- EP 1690889 A